(19) Europäisches Patentamt
European Patent Office
Office européen des brevets

(11) **EP 4 664 079 A1**

(12) **EUROPEAN PATENT APPLICATION**

(43) Date of publication:
**17.12.2025 Bulletin 2025/51**

(21) Application number: **25176134.2**

(22) Date of filing: **13.05.2025**

(51) International Patent Classification (IPC):
**G01G 9/00** *(2006.01)* **G01G 23/01** *(2006.01)*

(52) Cooperative Patent Classification (CPC):
**G01G 9/005; G01G 23/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.06.2024 US 202418743795**

(71) Applicant: **Honeywell International Inc.
Charlotte, NC 28202 (US)**

(72) Inventors:
• **HOFMAN, Gertjan
Charlotte, 28202 (US)**
• **MOUNTER, Paul
Charlotte, 28202 (US)**

(74) Representative: **Haseltine Lake Kempner LLP
Cheapside House
138 Cheapside
London EC2V 6BJ (GB)**

(54) **SYSTEM AND METHOD FOR UTILIZING A RADIATION BASIS WEIGHT GAUGE TO DETERMINE A BASIS WEIGHT OF A COATING MATERIAL**

(57) An example system, computer-implemented method, and computer program product for determining a basis weight of a coating material on a base material using radiation basis weight gauges is provided. An example system includes a radiation basis weight gauge and a controller. The radiation basis weight gauge is configured to direct measurement particles at a coated material, the coated material including a base material and a coating material, and determine a coated material uncorrected basis weight, based on a number of the measurement particles received at a radiation detector. The controller is configured to determine a base material uncorrected basis weight based on a base material corrected basis weight. The controller is further configured to use a coating material correction factor a determine the basis weight of the coating material based on a difference between the coated material uncorrected basis weight and the base material uncorrected basis weight.

FIG. 1

**Description**

**TECHNOLOGICAL FIELD**

Embodiments of the present disclosure relate generally to determining a basis weight of a coating material on a base material, and more particularly, to utilizing x-ray and/or beta radiation basis weight gauges to determine the weight of the coating material.

**BACKGROUND**

Applicant has identified many technical challenges and difficulties associated with accurately measuring the basis weight of a coating material using radiation basis weight gauges. Through applied effort, ingenuity, and innovation, Applicant has solved problems related to accurately measuring the basis weight of a coating material by developing solutions embodied in the present disclosure, which are described in detail below.

**BRIEF SUMMARY**

Various embodiments are directed to an example system, computer-implemented method, and computer program product for determining a coating material corrected basis weight of a coating material on a base material using radiation basis weight gauges. An example system comprises a radiation basis weight gauge and a controller. The radiation basis weight gauge is configured to direct measurement particles at a coated material comprising a base material and a coating material, and determine a coated material uncorrected basis weight, based on a number of the measurement particles received at a radiation detector. The controller is configured to determine a base material uncorrected basis weight based on a base material corrected basis weight. The controller is further configured to determine a coating material corrected basis weight based on a difference between the coated material uncorrected basis weight and the base material uncorrected basis weight, and a coating material correction factor.

In some embodiments, the base material uncorrected basis weight is determined based on a base material correction factor.

In some embodiments, the base material correction factor represents a ratio of the base material corrected basis weight and the base material uncorrected basis weight.

In some embodiments, the coating material correction factor is determined based on measurements of the base material and the coated material by the radiation basis weight gauge.

In some embodiments, the coating material correction factor is determined based on a ratio of: (1) a corrected basis weight difference between a coated material corrected basis weight and the base material corrected basis weight; and (2) an uncorrected basis weight difference between the coated material uncorrected basis weight and the base material uncorrected basis weight.

In some embodiments, the coating material correction factor is determined based on x-ray computer modeling.

In some embodiments, a coating material atomic weight is different than a base material atomic weight.

In some embodiments, the base material is a metal, and the coating material is a silicon-graphite composite.

In some embodiments, at least one of the coating material atomic weight and the base material atomic weight is at least twice as big as the other of the coating material atomic weight and the base material atomic weight.

In some embodiments, the coated material is an anode for a battery cell.

In some embodiments, the radiation basis weight gauge comprises a beta transmission gauge.

In some embodiments, the radiation basis weight gauge comprises an x-ray transmission gauge.

In some embodiments, the system further comprises a second radiation basis weight gauge configured to direct measurement particles at the base material, and determine the base material corrected basis weight.

A computer-implemented method for determining a coating material corrected basis weight of a coating material on a base material, the computer-implemented method comprising: receiving a base material corrected basis weight of the base material; determining a base material uncorrected basis weight corresponding to a radiation basis weight gauge based on the base material corrected basis weight; receiving a coated material uncorrected basis weight from the radiation basis weight gauge, wherein the radiation basis weight gauge is configured to direct measurement particles at a coated material comprising the base material and the coating material, and determine the coated material uncorrected basis weight, based on a number of the measurement particles received at a radiation detector; and determining the coating material corrected basis weight based on a difference between the coated material uncorrected basis weight and the base material uncorrected basis weight, and a coating material correction factor.

In some embodiments, the base material uncorrected basis weight is determined based on a base material correction factor.

In some embodiments, the base material correction factor represents a ratio of the base material corrected basis weight and the base material uncorrected basis weight.

In some embodiments, the method further comprises determining a corrected basis weight difference representing a difference between a coated material corrected basis weight and the base material corrected basis weight; determining an uncorrected basis weight difference representing a difference between the coated material uncorrected basis weight and the base material uncorrected basis weight; and determining the coating material correction factor based on a ratio of the corrected basis weight difference and the uncorrected basis weight difference.

In some embodiments, the coated material is an anode for a battery cell.

In some embodiments, the method further comprises receiving the base material corrected basis weight from a second radiation basis weight gauge configured to direct measurement particles at the base material, to determine the base material corrected basis weight.

An computer program product for determining a coating material corrected basis weight of a coating material on a base material is also provided. In some embodiments, the computer program product comprises at least one non-transitory computer-readable storage medium having computer-readable program code portions stored therein, the computer-readable program code portions comprising an executable portion configured to: receive a base material corrected basis weight of the base material; determine a base material uncorrected basis weight corresponding to a radiation basis weight gauge based on the base material corrected basis weight; receive a coated material uncorrected basis weight from the radiation basis weight gauge, wherein the radiation basis weight gauge is configured to direct measurement particles at a coated material comprising the base material and the coating material, and determine the coated material uncorrected basis weight, based on a number of the measurement particles received at a radiation detector; and determine the coating material corrected basis weight based on a difference between the coated material uncorrected basis weight and the base material uncorrected basis weight, and a coating material correction factor.

## BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.

FIG. 1 illustrates an example radiation basis weight gauge configured to determine a basis weight of a base material and a coated material in accordance with an example embodiment of the present disclosure.

FIG. 2 illustrates an example coated material comprising a base material and a coating material in accordance with an example embodiment of the present disclosure.

FIG. 3 illustrates an example block diagram of a coating basis weight measurement system in accordance with an example embodiment of the present disclosure.

FIG. 4 illustrates an example flow diagram of an example coating basis weight measurement system configured to generate a coating material corrected basis weight in accordance with an example embodiment of the present disclosure.

FIG. 5 illustrates a flow diagram of an example method for determining a coating material corrected basis weight in accordance with an example embodiment of the present disclosure.

FIG. 6 depicts a block diagram of example compute components of a controller in accordance with an example embodiment of the present disclosure.

## DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with determining an accurate basis weight (weight per unit area) and/or thickness of a coating material using x-ray and/or beta radiation basis weight gauges. As understood by those of skill in the field to which the present disclosure pertains, there are numerous example scenarios in which an accurate determination of a coating material basis weight may be necessary.

It is often desirable to coat a base material (e.g., paper, plastic, metal) with a precise amount of uniform coating material. For example, certain components of lithium-ion batteries, such as the anode and cathode layers, may be coated in materials facilitating the transfer of ions between the positively charged cathode and the negatively charged anode. Uniform coating material may be necessary to the efficient operation of the lithium-ion battery cell. Further, uniform coating in battery cells may ensure separation of the internal components of a battery cell. Failure to separate internal components of the battery cell may lead to internal shorts resulting in dangerous battery conditions. In addition, coating materials may be expensive. Uniform coating may minimize wasted coating material in certain coating applications, reducing the overall manufacturing costs.

Measurement of a coating material on a surface of a base material may be accomplished by x-ray and/or beta radiation basis weight gauges. A radiation basis weight gauge may utilize the absorption and scattering of accelerated particles (e.g., beta particles) to determine the basis weight (or thickness) of a target material. For example, in some embodiments, a radiation basis weight gauge may include a radiation source directed at the target material and configured to emit particles toward the target material. The radiation basis weight gauge may further include a radiation detector configured to receive the particles passing through the target material. Depending on the number of particles absorbed and/or scattered by the target material, the basis weight of the target material may be determined.

In general, a radiation basis weight gauge is calibrated on a known material, for example, polyethylene terephthalate (PET), aluminum, or other material. A correction factor may then be determined for each target material based on the relationship of the target material to the calibration material (e.g., PET). For example, in some embodiments, a correction factor may be determined previous to operation utilizing a sample of the target material. The actual basis weight of the target material may be determined using an accurately known area of the material weighed on laboratory scale. A PET-calibrated radiation basis weight gauge may then be used to determine an uncorrected basis weight. The correction factor for the target material is determined based on the ratio of the actual weight of the sample of target material to the uncorrected basis weight of the sample of target material returned by the PET-calibrated radiation basis weight gauge. Thus, during operation, the correction factor for the sample target material may be utilized to determine a corrected basis weight of a target material based on the uncorrected basis weight returned by the radiation basis weight gauge. The corrected basis weight is an approximation of the actual basis weight of the target material based on the correction factor.

In some previous examples, the principles employed by a radiation basis weight gauge have been used to determine the basis weight of a coating material on a base material. For example, in some applications, a coating material may be applied to a continuous moving sheet of a base material using a coating device. The base material passes through the coating device such that a coating material is applied to the surface of the base material. In such previous examples, two or more radiation basis weight gauges are used to determine the weight of the coating material. The weight of the base material is determined prior to the coating device and a second weight measurement is made from a radiation basis weight gauge downstream from the coating device. The first weight measurement is of the base material. The second radiation basis weight gauge is configured to measure the weight of the coated material (e.g., the base material with a coating material layer). The weight of the coating material may then be determined by subtracting the weight of the base material from the weight of the coated material.

However, determining the weight of the coating material using simple subtraction may introduce inaccuracies. For example, in instances in which the base material and the coating materials have different correction factors. As described above, in general, correction factors may be measured in a lab and used to configure a radiation basis weight gauge. In the case of a base material, the base material may be measured and a correction factor for the base material determined. Similarly, the coated material (e.g., base material and coating material) may be measured and a correction factor for the coated material determined. Unfortunately, the correction factor for the coated material may change based on the ratio of coating material to base material. In addition, the correction factor of the coating material alone may be difficult to measure, particularly in an instance in which the coating material comprises a powder, liquid, or similar substance. As a result, in some examples, the basis weight of the coated material may be used to approximate changes in the coating material during operation.

Utilizing the correction factor of the coated material to determine changes in the basis weight of the coating material may be problematic, specifically in an instance in which the atomic weight of the coating material and the base material are significantly different. As an example, a coated material (e.g., including a base material and coating material) may exhibit a correction factor of 1 for the base material, a correction factor of 0.5 for the coated material, and a correction factor of 0.125 for the coating material. In an instance in which the actual weight of the coated material changes by 1 gram but the change is due solely to a change in the amount of coating material, the uncorrected basis weight should register a change of 1 gram/(0.125) = 8 grams due to the change in coating material. However, if the correction factor for the coated material is used in an instance in which the calibration weight changes by 8 grams, the determined change in corrected basis weight is 8 grams *(0.5) = 4 grams. Thus, a coating material change of 1 gram may actually be reported as a coating material change of 4 grams.

The various example embodiments described herein utilize various techniques to accurately determine a coating material corrected basis weight of a coating material disposed on a base material using a downstream radiation basis weight gauge. For example, in some embodiments, a basis weight (or approximation of the actual basis weight) of the base material may be determined, for example, using an upstream radiation basis weight gauge, based on the base material documentation, as provided by a seller, or any other way. The base material basis weight (actual or approximate) may be converted into a base material uncorrected basis weight corresponding to the downstream radiation basis weight gauge using the base material correction factor for the downstream radiation basis weight gauge.

Further, a coated material uncorrected basis weight may be received from the downstream radiation basis weight gauge. The coated material uncorrected basis weight may be used to determine an artificial uncorrected basis weight for the coating material corresponding to the downstream radiation basis weight gauge by determining the difference between the coated material uncorrected basis weight and the base material uncorrected basis weight. Once the coating material uncorrected basis weight is determined, the coating material corrected basis weight may be determined by applying the coating material correction factor to the coating material uncorrected basis weight.

By converting the various weights of the materials into uncorrected basis weights corresponding to the downstream radiation basis weight gauge and performing the difference operation based on the uncorrected basis weights, the uncorrected basis weight of the coating material may be isolated. Thus, enabling determination of the coating material corrected basis weight using the coating material correction factor. The coating material corrected basis weight representing a more accurate approximation of the actual basis weight of the coating material.

In some embodiments, the correction factor associated with the coating material corresponding to the downstream radiation basis weight gauge may be determined based on the corrected basis weights and uncorrected basis weights of the base material and the coated material. For example, the coating material correction factor corresponding to the downstream radiation basis weight gauge may be equal to the ratio of the difference in corrected basis weights of the coated material and the base material, and the difference in uncorrected basis weights associated with the downstream radiation basis weight gauge of the coated material and the base material.

As a result of the herein described example embodiments and in some examples, the accuracy of a coating material basis weights (e.g., thickness) on a base material may be accurately determined. The accurate determination of a coating material weight may enable more efficient and safe operation of the device utilizing the coated material. In addition, in some embodiments, wasted coating material and wasted cost in the manufacture of a coated material may be minimized.

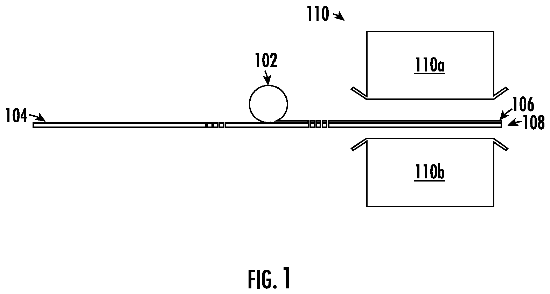

Referring now to FIG. 1, and example coating device 102 and accompanying radiation basis weight gauge (e.g., downstream radiation basis weight gauge 110) are provided. As depicted in FIG. 1, the example coating device 102 is configured to apply a coating material 106 to a base material 104, creating a coated material 108 comprising the base material 104 and the coating material 106. As further depicted in FIG. 1, the downstream radiation basis weight gauge 110 includes a radiation source 110a on a first side of the coated material 108 and a radiation detector 110b on an opposite side of the coated material 108 from the radiation source 110a.

As depicted in FIG. 1, the coating basis weight measurement system includes a coating device 102. A coating device 102 comprises any system or mechanism configured to apply a coating material on a surface of a base material. A coating device 102 may utilize any mechanism to apply a coating to a base material surface. For example, a coating device 102 may utilize mechanical metering, including knife-over-roll coating, comma roll coating, roll coating; volumetric coating, including slot die coating; spray coating; aerosol coating; brush coating; dip coating; and so on.

As further depicted in FIG. 1, a coating basis weight measurement system includes a radiation basis weight gauge 110. A radiation basis weight gauge 110 is any system or device configured to transmit measurement particles toward a target material (e.g., coated material 108) to determine one or more physical properties of the target material, for example, the basis weight. The basis weight of a target material is the weight per unit of a material. For example, the basis weight of a coated material 108 may be measured in grams per meter-squared. The radiation basis weight gauge 110 includes a radiation source 110a configured to direct measurement particles toward a target material and a radiation detector 110b configured to receive a portion of the transmitted measurement particles. In some embodiments, a radiation basis weight gauge 110 may include a beta particle radiation source 110a. In such an instance, a radiation source 110a may utilize a radioactive isotope source to emit beta rays. In some embodiments, a radiation basis weight gauge 110 may include an x-ray radiation source 110a. In such an instance, a radiation source 110a may generate x-rays to be transmitted at the target material.

A portion of the transmitted measurement particles transmitted by the radiation source 110a are scattered and/or absorbed by the target material. A radiation basis weight gauge 110 utilizes the absorption and scattering of measurement particles to determine a basis weight of a material. For example, a radiation basis weight gauge 110 may determine the basis weight of a material based on a number of particles received at the radiation detector 110b. In some embodiments, a radiation basis weight gauge 110 may determine the basis weight of the target material based on the ratio of transmitted measurement particles received at the radiation detector 110b with and without the target material present between the radiation source 110a and radiation detector 110b.

Radiation basis weight gauges 110 respond differently to materials with different atomic weights. For example, high atomic number (Z) materials absorb and/or scatter more measurement particles transmitted by the radiation source 110a then low atomic number materials. Thus, a radiation basis weight gauge 110 is calibrated based on the target material. In general, calibration of a radiation basis weight gauge 110 may include configuration based on a known material, for example, polyethylene terephthalate (PET), aluminum, or other material. A correction factor is then utilized to determine the basis weight of the target material relative to the calibration material. A correction factor may be determined previous to operation utilizing a sample of the target material. The actual basis weight of the target material may be determined using a scale. The uncorrected basis weight may then be determined using a radiation basis weight gauge 110 configured for the calibrated material. The correction factor for the target material is determined based on the ratio of the actual basis weight of the sample of target material to the uncorrected basis weight of the sample of target material returned by the radiation basis weight gauge 110. Thus, during operation, the correction factor for the sample target material may be utilized to determine a corrected basis weight of a target material based on the uncorrected basis weight returned by the radiation basis weight gauge. The corrected basis weight is thus a determination of the actual basis weight of the target material as determined by the radiation basis weight gauge 110.

As described herein, the actual basis weight of a target material refers to the weight of a known area of the material if weighed on a scale. The corrected basis weight of a target material may be determined by multiplying an uncorrected basis weight by a correction factor for the target material on the specific radiation basis weight gauge 110, as depicted in Equation 1:

$$CORRECTED\_BASIS\_WEIGHT = UNCORRECTED\_BASIS\_WEIGHT * CORRECTION\_FACTOR \qquad (1)$$

As described herein, the uncorrected basis weight of a target material refers to the weight output by a radiation basis weight gauge (e.g., radiation basis weight gauge 110) before a correction factor has been applied.

As described herein, the correction factor is the ratio of the actual basis weight of the target material to the uncorrected basis weight of the target material. In most instances, the correction factor may be determined previous to operation of a coating basis weight measurement device.

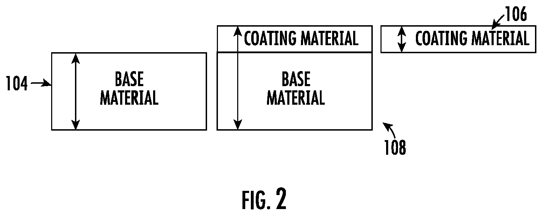

Referring now to FIG. 2, an example coated material 108 comprising a base material 104 and a coating material 106 disposed on a surface of the base material 104 are provided.

As depicted in FIG. 2, a base material 104 comprises any material configured to receive a coating material 106. A base material 104 may include paper, plastic, metal, or other material. In some embodiments, a base material 104 with a coating material 106 may comprise an anode or cathode of a battery cell or fuel cell. For example, in some embodiments, the base material 104 may comprise a conductive metal such as copper, aluminum, polymer membrane, gold, silver, etc.

A base material 104 comprises a base material corrected basis weight, a base material uncorrected basis weight, and a base material correction factor. The base material corrected basis weight corresponds to the actual weight of the base material as determined by a radiation basis weight gauge 110 applying a correction factor for the base material. The base material uncorrected basis weight is the sensor output corresponding to the weight of the base material determined by a radiation basis weight gauge before a correction factor is applied for the base material. A correction factor specific to a radiation basis weight gauge may be applied to the base material uncorrected basis weight to determine the base material corrected basis weight. The base material uncorrected basis weight is dependent on the radiation basis weight gauge and the calibration material used to calibrate that radiation basis weight gauge. The base material correction factor is the value by which the base material uncorrected basis weight is multiplied to determine the base material corrected basis weight. The base material correction factor may be specific to a radiation basis weight gauge and a configuration (e.g., calibrating material) of the radiation basis weight gauge. The base material correction factor may be determined prior to operation by weighing a sample of the base material, determining an uncorrected basis weight of the sample of base material, and finding the ratio of the actual basis weight of the base material to the base material uncorrected basis weight.

As further depicted in FIG. 2, a coating material 106 comprises a material, fluid, or other substance configured to be disposed on a surface of the coating material 106. For example, a coating material 106 may be disposed on the surface of a copper layer to form an anode of a battery cell. In such an instance, the coating material 106 may comprise a silicon-graphite material or platinum powder. The coating material 106 may facilitate the transfer of ions between the positively charged cathode and the negatively charged anode. Uneven or faulty distribution of the coating material 106 may result in shorts within the battery cell or fuel cell, leading to catastrophic battery conditions.

A coating material 106 comprises a coating material corrected basis weight, a coating material uncorrected basis weight, and a coating material correction factor. The coating material corrected basis weight corresponds to the actual weight of the coating material as determined by a radiation basis weight gauge 110 applying a correction factor for the coating material. The coating material uncorrected basis weight is the sensor output corresponding to the weight of the coating material determined by a radiation basis weight gauge before a correction factor is applied for the coating material. A correction factor specific to a radiation basis weight gauge may be applied to the coating material uncorrected basis weight to determine the coating material corrected basis weight. The coating material uncorrected basis weight is dependent on the radiation basis weight gauge and the calibration material used to calibrate that radiation basis weight gauge. The coating material correction factor is the value by which the coating material uncorrected basis weight is multiplied to determine the coating material corrected basis weight. The coating material correction factor may be specific to a radiation basis weight gauge and a configuration (e.g., calibrating material) of the radiation basis weight gauge. The coating material correction factor may be determined prior to operation by weighing a sample of the coating material, determining an uncorrected basis weight of the sample of coating material, and finding the ratio of the actual basis weight of the coating material to the coating material uncorrected basis weight.

The coating material correction factor is the value by which the coating material uncorrected basis weight is multiplied to determine the coating material corrected basis weight. The coating material correction factor may be specific to a radiation basis weight gauge and a configuration (e.g., calibrating material) of the radiation basis weight gauge. The coating material correction factor may be difficult or impossible to determine before operation because the coating material may comprise a powder or liquid and may not be measured without a base supporting substrate. As such, the coating material correction factor may be determined based on the determined properties of the coated material 108 and the base material 104. For example, the coating material correction factor $(CORRECTION\_FACTOR_{CM})$ may be determined approximated according to Equation (2):

$$(2)\ CORRECTION\_FACTOR_{CM} =$$

$$\frac{CORRECTED\_BASIS\_WEIGHT_{COATED} - CORRECTED\_BASIS\_WEIGHT_{BASE}}{UNCORRECTED\_BASIS\_WEIGHT_{COATED} - UNCORRECTED\_BASIS\_WEIGHT_{BASE}}$$

where $CORRECTED\_BASIS\_WEIGHT_{COATED}$ - $CORRECTED\_BASIS\_WEIGHT_{BASE}$ is the corrected basis weight difference representing the difference between the coated material corrected basis weight and the base material corrected basis weight and represents the corrected basis weight of the coating material for the measuring radiation basis weight gauge 110. Further, $UNCORRECTED\_BASIS\_WEIGHT_{COATED}$ - $UNCORRECTED\_BASIS\_WEIGHT_{BASE}$ is the uncorrected basis weight difference representing the difference between the uncorrected basis weight of the coated material and the uncorrected basis weight of the base material and represents the radiation basis weight gauge response to the coating material.

The coating material correction factor determined in Equation (2) represents a nonlimiting approximation of the coating material correction factor. Other operations may be utilized to determine a coating material correction factor, for example, a determination of the coating material correction factor based on chemical composition. In some embodiments, a coating material correction factor may be approximated with a constant value, such as 1. In some embodiments, the correction factor associated with the coating material corresponding to the downstream radiation basis weight gauge may be determined based on x-ray computer modeling, wherein the x-ray computer modeling determines the correction factor based on x-ray interaction with the material.

As further depicted in FIG. 2, a coated material 108 comprises a combination of the coating material 106 on a surface of the base material 104. A coated material 108 comprises a coated material corrected basis weight, a coated material uncorrected basis weight, and a coated material correction factor. The coated material corrected basis weight corresponds to the actual weight of the coated material as determined by a radiation basis weight gauge 110 applying a correction factor for the coated material. The coated material uncorrected basis weight is the sensor output corresponding to the weight of the coated material determined by a radiation basis weight gauge before a correction factor is applied for the coated material. A correction factor specific to a radiation basis weight gauge may be applied to the coated material uncorrected basis weight to determine the coated material corrected basis weight. The coated material uncorrected basis weight is dependent on the radiation basis weight gauge and the calibration material used to calibrate that radiation basis weight gauge. The coated material correction factor is the value by which the coated material uncorrected basis weight is multiplied to determine the coated material corrected basis weight. The coated material correction factor may be specific to a radiation basis weight gauge and a configuration (e.g., calibrating material) of the radiation basis weight gauge. The coated material correction factor may be determined prior to operation by weighing a sample of the coated material, determining an uncorrected basis weight of the sample of coated material, and finding the ratio of the actual basis weight of the coated material to the coated material uncorrected basis weight.

However, the coated material correction factor may change during operation based on the ratio of the coating material 106 to the base material 104. Thus, as the distribution of the coating material 106 changes, so does the coating material correction factor. As such, in an instance in which the coated material correction factor is relied on to determine changes in the coating material basis weight, inaccuracies may be introduced. Inaccuracies are particularly prevalent in an instance in which the atomic weight of the coating material 106 is different from the atomic weight of the base material 104. For example, in some embodiments, the atomic weight of the base material 104 may be more than two times the atomic weight of the coating material 106. In such an instance, neither the coating material correction factor nor the base material correction factor act as an adequate approximation of the coated material correction factor. Thus, as disclosed herein, in an instance in which the atomic weight of the coating material 106 is different than the atomic weight of the base material 104, the corrected basis weight of the coating material 106 may be determined without reliance on the coated material correction factor.

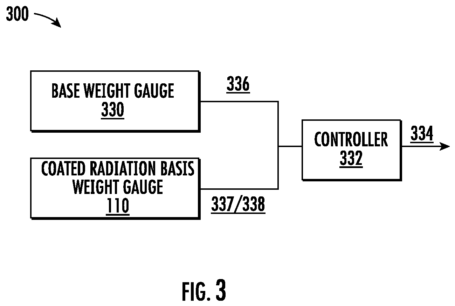

Referring now to FIG. 3, an example coating basis weight measurement system 300 is provided. As depicted in FIG. 3, the coating basis weight measurement system 300 includes a base weight gauge 330 configured to transmit a basis weight 336 (actual base weight or approximated basis weight, for example, a corrected basis weight) to a controller 332.

The coating basis weight measurement system 300 further includes a coated radiation basis weight gauge 110 configured to transmit a coated material uncorrected basis weight 338 and relevant correction factors 337 to the controller 332. Based on the basis weight 336 of the base material, the correction factors 337, and the coated material uncorrected basis weight 338, the controller 332 is configured to output a coating material corrected basis weight 334.

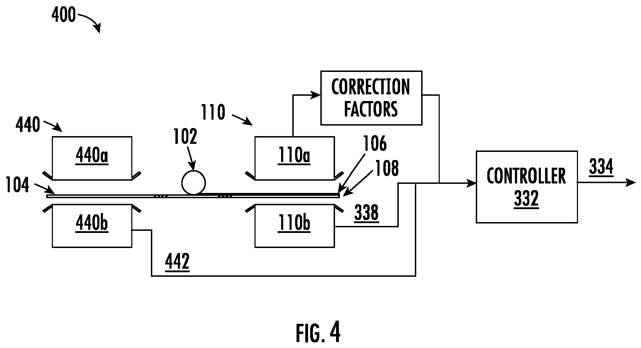

As depicted in FIG. 3, the example coating basis weight measurement system 300 includes a base weight gauge 330. The base weight gauge 330 comprises any device, system, or other mechanism utilized to determine the basis weight 336 of a base material 104. As described further in relation to FIG. 4, the base weight gauge 330 may comprise a radiation basis weight gauge configured to determine the corrected basis weight of a base material 104. However, a base weight gauge 330 may comprise any other mechanism utilized to determine the basis weight 336 of the base material 104. For example, the base weight gauge 330 may be an input mechanism configured to receive an automated or manual input specifying the basis weight 336 of the base material 104.

As further depicted in FIG. 3, the example coating basis weight measurement system 300 includes a coated radiation basis weight gauge 110. The coated radiation basis weight gauge 110 is positioned to determine the absorption and scattering characteristics of a coated material 108 comprising the base material 104 and a coating material 106. For example, in some embodiments, the coated radiation basis weight gauge 110 may be positioned after a coating device (e.g., coating device 102 as described in FIG. 1) has disposed the coating material 106 on the surface of the base material 104.

The coated radiation basis weight gauge 110 is configured to transmit the coated material uncorrected basis weight 338 to the controller 332. The coated material uncorrected basis weight 338 corresponds to the weight determined by the coated radiation basis weight gauge 110 before a correction factor has been applied. The coated material uncorrected basis weight 338 is dependent on the calibration of the coated radiation basis weight gauge 110. In some embodiments, the coated material uncorrected basis weight 338 may be determined by dividing the coated material corrected basis weight by the coated material correction factor for the coated radiation basis weight gauge 110.

The coated radiation basis weight gauge 110 is further configured to correction factors 337 to the controller 332. The correction factors 337 include the base material correction factor for the coated radiation basis weight gauge 110 and the coating material correction factor for the coated radiation basis weight gauge 110. As described in relation to FIG. 1, the base material correction factor may be determined previous to operation based on a sample of the base material. Similarly, the coating material correction factor may be determined based on samples of the base material and the coated material.

As further depicted in FIG. 3, the example coating basis weight measurement system 300 includes a controller 332. A controller 332 comprises any means such as a processor, device, microcontroller, or circuitry embodied in hardware, software, or a combination thereof that is configured to receive a basis weight 336 of a base material, correction factors 337, and a coated material uncorrected basis weight 338 to generate a coating material corrected basis weight 334.

The controller 332 is configured to determine the base material uncorrected basis weight in the context of the coated radiation basis weight gauge 110 based on the correction factors 337 provided by the coated radiation basis weight gauge 110. For example, the coated radiation basis weight gauge 110 is configured to transmit the base material correction factor as a part of the correction factors 337 specific to the coated radiation basis weight gauge 110. The base material correction factor enables the controller 332 to determine the base material uncorrected basis weight as if determined by the coated radiation basis weight gauge 110. The controller 332 may determine the base material uncorrected basis weight ($UNCORRECTED\_BASIS\_WEIGHT_{BASE}$), for example, according to Equation (3):

$$(3)\ UNCORRECTED\_BASIS\_WEIGHT_{BASE} = \frac{CORRECTED\_BASIS\_WEIGHT_{BASE}}{CORRECTION\_FACTOR_{BASE}}$$

where, $CORRECTED\_BASIS\_WEIGHT_{BASE}$ is the corrected basis weight of the base material as provided by the base weight gauge 330, and $CORRECTION\_FACTOR_{BASE}$ is the correction factor of the base material corresponding to the coated radiation basis weight gauge 110. Once the base material uncorrected basis weight relative to the coated radiation basis weight gauge 110 is determined, the coating material uncorrected basis weight relative to the coated radiation basis weight gauge 110 may be determined. The coating material uncorrected basis weight ($UNCORRECTED\_BASIS\_WEIGHT_{COATING}$) is determined according to Equation (4):

$$UNCORRECTED\_BASIS\_WEIGHT_{COATING} = UNCORRECTED\_BASIS\_WEIGHT_{COATED} - UNCORRECTED\_BASIS\_WEIGHT_{BASE} \quad (4)$$

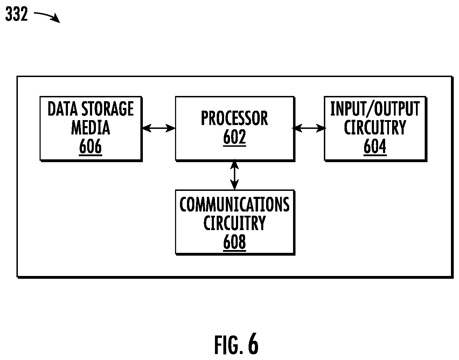

where $UNCORRECTED\_BASIS\_WEIGHT_{COATED}$ is the uncorrected basis weight of the coated material as provided by the coated radiation basis weight gauge 110, and $UNCORRECTED\_BASIS\_WEIGHT_{BASE}$ is the base material uncorrected basis weight as determined by the controller 332 based on the correction factors 337 corresponding to the coated radiation basis weight gauge 110. The controller 332 may comprise a form as shown and described in relation to FIG. 6. While FIG. 6 provides an example controller 332, it is noted that the scope of the present disclosure is not limited to the example shown in FIG. 6.

As further depicted in FIG. 3, the example coating basis weight measurement system 300 is configured to generate the coating material corrected basis weight 334. The coating material corrected basis weight 334 corresponds to the corrected basis weight of the coating material disposed on the surface of the base material. By determining the base material uncorrected basis weight in the context of the coated radiation basis weight gauge 110, the coating material corrected basis weight 334 may be ascertained. For example, the coating material uncorrected basis weight may be multiplied by the coating material correction factor corresponding to the coated radiation basis weight gauge 110, as illustrated in Equation (5):

$$CORRECTED\_BASIS\_WEIGHT_{COATING} = UNCORRECTED\_BASIS\_WEIGHT_{COATING} * CORRECTION\_FACTOR_{COATING} \tag{5}$$

where $CORRECTED\_BASIS\_WEIGHT_{COATING}$ is the corrected basis weight of the coating material, $UNCORRECTED\_BASIS\_WEIGHT_{COATING}$ is the uncorrected basis weight of the coating material as if generated by the coated radiation basis weight gauge 110, and $CORRECTION\_FACTOR_{COATING}$ is the coating material correction factor corresponding to the coated radiation basis weight gauge 110. The coating material correction factor may be determined previous to operation, for example, as shown in Equation (2).

Referring now to FIG. 4, an example embodiment of a coating basis weight measurement system 400 including an upstream radiation basis weight gauge 440 and a downstream radiation basis weight gauge 110 is provided. As depicted in FIG. 4, the upstream radiation basis weight gauge 440 comprises a radiation source 440a and a radiation detector 440b positioned to detect the basis weight of the base material 104 before the coating material 106 is applied by the coating device 102. The downstream radiation basis weight gauge 110 comprises a radiation source 110a and a radiation detector 110b positioned to detect the basis weight of the coated material 108 after the coating material 106 is applied to the base material 104 by the coating device 102. The controller 332 is configured to receive correction factors 337 and a coated material uncorrected basis weight 338 from the downstream radiation basis weight gauge 110. The controller 332 is further configured to receive a base material corrected basis weight 442 from the upstream radiation basis weight gauge 440. The controller 332 determines a coating material corrected basis weight 334 based on the correction factors 337, the coated material uncorrected basis weight 338, and the base material corrected basis weight 442.

As depicted in FIG. 4, the example coating basis weight measurement system 400 includes an upstream radiation basis weight gauge 440. The upstream radiation basis weight gauge 440 utilizes a radiation source 440a and a radiation detector 440b to transmit measurement particles toward the base material 104. The upstream radiation basis weight gauge 440 may utilize the absorption and scatter of the measurement particles to determine a basis weight of the base material 104. The upstream radiation basis weight gauge 440 is calibrated separately from the downstream radiation basis weight gauge 110 and may be configured according to a different set of correction factors. As such, the upstream radiation basis weight gauge 440 determines a base material corrected basis weight 442 according to the correction factors of the upstream radiation basis weight gauge 440. The base material corrected basis weight 442 indicates the actual weight of the base material 104 as determined by the upstream radiation basis weight gauge 440. The upstream radiation basis weight gauge 440 transmits the base material corrected basis weight 442 to the controller 332 to aid in the determination of the coating material corrected basis weight 334.

As further depicted in FIG. 4, the example coating basis weight measurement system 400 includes a downstream radiation basis weight gauge 110. The downstream radiation basis weight gauge 110 is configured to measure the basis weight of the coated material 108 after the coating device 102 has deposited the coating material 106 on the base material 104. The downstream radiation basis weight gauge 110 is calibrated separately from the upstream radiation basis weight gauge 440 and may be configured according to a different set of correction factors 337. The correction factors 337 for the downstream radiation basis weight gauge 110 include the base material correction factor for the downstream radiation basis weight gauge 110 and the coating material correction factor for the downstream radiation basis weight gauge 110. As described in relation to FIG. 1, the base material correction factor may be determined previous to operation based on a sample of the base material. Similarly, the coating material correction factor may be determined based on samples of the base material and the coated material. The correction factors 337 for the downstream radiation basis weight gauge 110 are transmitted to the controller 332 to aid in the determination of the coating material corrected basis weight 334.

As further depicted in FIG. 4, the downstream radiation basis weight gauge 110 is configured to generate a coated material uncorrected basis weight 338. The coated material uncorrected basis weight 338 corresponds to the weight determined by the downstream radiation basis weight gauge 110 before a correction factor has been applied. The coated material uncorrected basis weight 338 is dependent on the calibration of the downstream radiation basis weight gauge 110. The coated material uncorrected basis weight 338 is provided to the controller 332 by the downstream radiation basis weight gauge 110 along with the correction factors 337.

As further depicted in relation to FIG. 4, the example coating basis weight measurement system 400 includes a controller 332 configured to receive the base material corrected basis weight 442 from the upstream radiation basis weight gauge 440, the coated material uncorrected basis weight 338 from the downstream radiation basis weight gauge 110, and the correction factors 337 from the downstream radiation basis weight gauge 110. As described in relation to FIG. 3, The controller 332 is configured to determine the base material uncorrected basis weight in the context of the downstream radiation basis weight gauge 110 based on the correction factors 337 provided by the downstream radiation basis weight gauge 110. The base material correction factor for the downstream radiation basis weight gauge 110 enables the controller 332 to determine the base material uncorrected basis weight as if determined by the downstream radiation basis weight gauge 110.

As further described in relation to FIG. 3, the coating material uncorrected basis weight may be determined by calculating the difference between the coated material uncorrected basis weight and the base material uncorrected basis weight. The coating material uncorrected basis weight approximates the output from the downstream radiation basis weight gauge 110 as if the coating material alone was exposed to the measurement particles transmitted by the radiation source 110a.

The controller 332 further determines the coating material corrected basis weight 334 by applying the coating material correction factor to the coating material uncorrected basis weight.

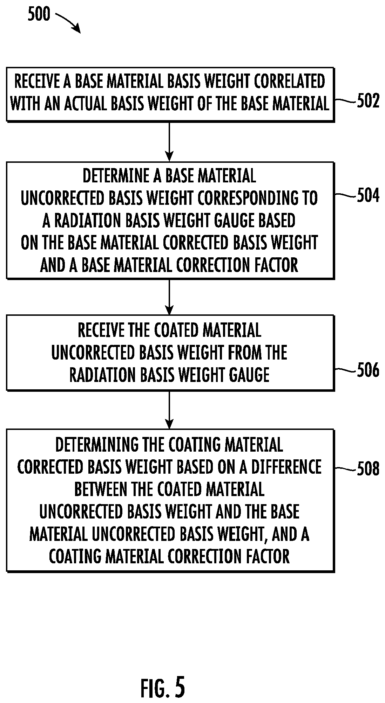

Referring now to FIG. 5, an example method 500 for determining a coating material corrected basis weight (e.g., coating material corrected basis weight 334) of a coating material (e.g., coating material 106 on a base material (e.g., base material 104) is provided. At block 502, a controller (e.g., controller 332) receives a base material corrected basis weight (e.g., base material corrected basis weight 442) of the base material. The base material corrected basis weight represents the actual weight of the base material as determined by a radiation basis weight gauge. In some embodiments, a second radiation basis weight gauge (e.g., upstream radiation basis weight gauge 440) may be positioned to detect the basis weight of the base material before a coating material is applied. In such an instance, the second radiation basis weight gauge may apply a calibrated correction factor specific to the upstream radiation basis weight gauge to determine the base material corrected basis weight. However, in some embodiments, another representation of the actual basis weight of the base material may be provided. For example, the actual basis weight of the base material may be obtained before operation and input to a coating basis weight measurement system (e.g., coating basis weight measurement system 300, 400) using an input mechanism.

At block 504, the controller determines a base material uncorrected basis weight corresponding to a radiation basis weight gauge (e.g., radiation basis weight gauge 110) based on the base material corrected basis weight. The coating basis weight measurement system determines a base material uncorrected basis weight based on the received base material corrected basis weight. The base material uncorrected basis weight correlates to the radiation basis weight gauge positioned to measure the coated material (e.g., coated material 108). Thus, the determined base material uncorrected basis weight approximates the uncorrected basis weight that would be generated by the radiation basis weight gauge positioned to measure the coated material if the radiation basis weight gauge were to measure the base material directly. The base material uncorrected basis weight may be determined by dividing the base material corrected basis weight by the base material correction factor corresponding to the radiation basis weight gauge positioned to measure the coated material, as shown in Equation (3). The base material correction factor corresponding to the radiation basis weight gauge positioned to measure the coated material may be determined through a calibration process, for example, prior to operation.

At block 506, the controller receives a coated material uncorrected basis weight (e.g., coated material uncorrected basis weight 338) from the radiation basis weight gauge, wherein the radiation basis weight gauge is configured to direct measurement particles at a coated material comprising the base material and the coating material, and determine a coated material uncorrected basis weight (e.g., coated material uncorrected basis weight 338), based on a number of the measurement particles received at a radiation detector (e.g., radiation detector 110b). Positioned proximate the coated material, after the coating material is applied to the base material, the radiation basis weight gauge utilizes principles of absorption and scattering to determine an uncorrected coated material basis weight. The uncorrected coated material basis weight is the uncorrected basis weight of the coated material generated by the radiation basis weight gauge positioned to measure the coated material before a correction factor is applied. Thus, both the coated material uncorrected basis weight and the base material uncorrected basis weight represent the uncorrected basis weight as generated or would be generated by the radiation basis weight gauge positioned to measure the coated material before a correction factor is applied.

At block 508, the controller determines the coating material corrected basis weight based on a difference between the coated material uncorrected basis weight and the base material uncorrected basis weight, and a coating material correction factor. By determining the coated material uncorrected basis weight and the base material uncorrected basis weight in the context of the radiation basis weight gauge positioned to measure the coated material, the coating material uncorrected basis weight at the radiation basis weight gauge positioned to measure the coated material may be determined by simple subtraction. For example, as shown in Equation (4). Further, the coating material corrected basis weight may be determined by multiplying the coating material uncorrected basis weight by the coating material correction factor corresponding to the radiation basis weight gauge positioned to measure the coated material, for example, as shown in Equation (5).

Referring now to FIG. 6, FIG. 6 illustrates an example controller 332 in accordance with at least some example embodiments of the present disclosure. The controller 332 includes processor 602, input/output circuitry 604, data storage media 606, and communications circuitry 608. In some embodiments, the controller 332 is configured, using one or more of the sets of circuitry 602, 604, 606, and 608, to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The user of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively, or additionally, in some embodiments, other elements of the controller 332 provide or supplement the functionality of other particular sets of circuitry. For example, the processor 602 in some embodiments provides processing functionality to any of the sets of circuitry, the data storage media 606 provides storage functionality to any of the sets of circuitry, the communications circuitry 608 provides network interface functionality to any of the sets of circuitry, and/or the like.

In some embodiments, the processor 602 (and/or co-processor or any other processing circuitry assisting or otherwise associated with the processor) is/are in communication with the data storage media 606 via a bus for passing information among components of the controller 332. In some embodiments, for example, the data storage media 606 is non-transitory and may include, for example, one or more volatile and/or non-volatile memories. In other words, for example, the data storage media 606 in some embodiments includes or embodies an electronic storage device (e.g., a computer readable storage medium). In some embodiments, the data storage media 606 is configured to store information, data, content, applications, instructions, or the like, for enabling the controller 332 to carry out various functions in accordance with example embodiments of the present disclosure.

The processor 602 may be embodied in a number of different ways. For example, in some example embodiments, the processor 602 includes one or more processing devices configured to perform independently. Additionally, or alternatively, in some embodiments, the processor 602 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the controller 332, and/or one or more remote or "cloud" processor(s) external to the controller 332.

In an example embodiment, the processor 602 is configured to execute instructions stored in the data storage media 606 or otherwise accessible to the processor. Alternatively, or additionally, the processor 602 in some embodiments is configured to execute hard-coded functionality. As such, whether configured by hardware or software methods, or by a combination thereof, the processor 602 represents an entity (e.g., physically embodied in circuitry) capable of performing operations according to an embodiment of the present disclosure while configured accordingly. Alternatively, or additionally, as another example in some example embodiments, when the processor 602 is embodied as an executor of software instructions, the instructions specifically configure the processor 602 to perform the algorithms embodied in the specific operations described herein when such instructions are executed.

In some embodiments, the controller 332 includes input/output circuitry 604 that provides output to the user and, in some embodiments, to receive an indication of a user input. In some embodiments, the input/output circuitry 604 is in communication with the processor 602 to provide such functionality. The input/output circuitry 604 may comprise one or more user interface(s) (e.g., user interface) and in some embodiments includes a display that comprises the interface(s) rendered as a web user interface, an application user interface, a user device, a backend system, or the like. The processor 602 and/or input/output circuitry 604 comprising the processor may be configured to control one or more functions of one or more user interface elements through computer program instructions (e.g., software and/or firmware) stored on a memory accessible to the processor (e.g., data storage media 606, and/or the like). In some embodiments, the input/output circuitry 604 includes or utilizes a user-facing application to provide input/output functionality to a client device and/or other display associated with a user.

In some embodiments, the controller 332 includes communications circuitry 608. The communications circuitry 608 includes any means such as a device or circuitry embodied in either hardware or a combination of hardware and software that is configured to receive and/or transmit data from/to a network and/or any other device, circuitry, or module in communication with the controller 332. In this regard, the communications circuitry 608 includes, for example in some embodiments, a network interface for enabling communications with a wired or wireless communications network. Additionally, or alternatively in some embodiments, the communications circuitry 608 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 608 includes circuitry for interacting with the antenna(s) and/or other hardware or software to cause transmission of signals via the antenna(s) or to handle receipt of signals received via the antenna(s). In some embodiments, the communications circuitry 608 enables transmission to and/or receipt of data from a client device in communication with the controller 332.

Additionally, or alternatively, in some embodiments, one or more of the sets of circuitry 602-608 are combinable. Additionally, or alternatively, in some embodiments, one or more of the sets of circuitry perform some or all of the functionality described associated with another component. For example, in some embodiments, one or more sets of circuitry 602-608 are combined into a single module embodied in hardware, software, firmware, and/or a combination thereof. Similarly, in some embodiments, one or more of the sets of circuitry is/are combined such that the processor 602 performs one or more of the operations described above with respect to each of these circuitry individually.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. For example, one skilled in the art may recognize that such principles may be applied to any coated material in which the base material and the coating material have different atomic weights. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1.  A system comprising:

    a radiation basis weight gauge configured to direct measurement particles at a coated material comprising a base material and a coating material, and determine a coated material uncorrected basis weight, based on a number of the measurement particles received at a radiation detector; and
    a controller, configured to:

      determine a base material uncorrected basis weight based on a base material basis weight; and
      determine a coating material corrected basis weight based on a difference between the coated material uncorrected basis weight and the base material uncorrected basis weight, and a coating material correction factor.

2.  The system of claim 1, wherein the base material uncorrected basis weight is determined based on a base material correction factor, and wherein the base material correction factor represents a ratio of a base material actual basis weight and the base material uncorrected basis weight.

3.  The system of claim 1, wherein the coating material correction factor is determined based on a ratio of: (1) a corrected basis weight difference between a coated material corrected basis weight and a base material corrected basis weight; and (2) an uncorrected basis weight difference between the coated material uncorrected basis weight and the base material uncorrected basis weight.

4. The system of claim 1, wherein the coating material correction factor is determined based on x-ray computer modeling.

5. The system of claim 1, wherein a coating material atomic weight is different than a base material atomic weight.

6. The system of claim 5, wherein at least one of the coating material atomic weight and the base material atomic weight is at least twice as big as the other of the coating material atomic weight and the base material atomic weight.

7. The system of claim 1, wherein the coated material is an anode for a battery cell.

8. The system of claim 1, wherein the radiation basis weight gauge comprises a beta transmission gauge.

9. The system of claim 1, wherein the radiation basis weight gauge comprises an x-ray transmission gauge.

10. The system of claim 1, further comprising:
a second radiation basis weight gauge configured to direct measurement particles at the base material, and determine the base material basis weight based on a base material corrected basis weight.

11. A computer-implemented method for determining a coating material corrected basis weight of a coating material on a base material, the computer-implemented method comprising:

receiving a base material basis weight correlated with an actual basis weight of the base material;
determining a base material uncorrected basis weight corresponding to a radiation basis weight gauge based on the base material basis weight;
receiving a coated material uncorrected basis weight from the radiation basis weight gauge, wherein the radiation basis weight gauge is configured to direct measurement particles at a coated material comprising the base material and the coating material, and determine the coated material uncorrected basis weight, based on a number of the measurement particles received at a radiation detector; and
determining the coating material corrected basis weight based on a difference between the coated material uncorrected basis weight and the base material uncorrected basis weight, and a coating material correction factor.

12. The computer-implemented method of claim 11, wherein the base material uncorrected basis weight is determined based on a base material correction factor, and wherein the base material correction factor represents a ratio of a base material actual basis weight and the base material uncorrected basis weight.

13. The computer-implemented method of claim 11, further comprising:

determining a corrected basis weight difference representing a difference between a coated material corrected basis weight and a base material corrected basis weight;
determining an uncorrected basis weight difference representing a difference between the coated material uncorrected basis weight and the base material uncorrected basis weight; and
determining the coating material correction factor based on a ratio of the corrected basis weight difference and the uncorrected basis weight difference.

14. The computer-implemented method of claim 11, wherein the coated material is an anode for a battery cell.

15. The computer-implemented method of claim 11, further comprising:
receiving the base material basis weight from a second radiation basis weight gauge configured to direct measurement particles at the base material, to determine a base material corrected basis weight.

FIG. 1

FIG. 2

300 ⬊

```
┌─────────────────────────┐
│   BASE WEIGHT GAUGE     │      336
│          330            │─────────┐
└─────────────────────────┘         │
                                    │    ┌──────────────┐    334
                                    ├────│  CONTROLLER  │────────▶
┌─────────────────────────┐         │    │     332      │
│ COATED RADIATION BASIS  │         │    └──────────────┘
│      WEIGHT GAUGE       │─────────┘
│          110            │   337/338
└─────────────────────────┘
```

FIG. 3

FIG. 4

500

```
┌─────────────────────────────────────────────┐
│ RECEIVE A BASE MATERIAL BASIS WEIGHT CORRELATED │──502
│ WITH AN ACTUAL BASIS WEIGHT OF THE BASE MATERIAL │
└─────────────────────────────────────────────┘
                      │
                      ▼
┌─────────────────────────────────────────────┐
│          DETERMINE A BASE MATERIAL          │
│ UNCORRECTED BASIS WEIGHT CORRESPONDING TO   │──504
│       A RADIATION BASIS WEIGHT GAUGE BASED  │
│   ON THE BASE MATERIAL CORRECTED BASIS WEIGHT │
│     AND A BASE MATERIAL CORRECTION FACTOR   │
└─────────────────────────────────────────────┘
                      │
                      ▼
┌─────────────────────────────────────────────┐
│          RECEIVE THE COATED MATERIAL        │
│     UNCORRECTED BASIS WEIGHT FROM THE       │──506
│        RADIATION BASIS WEIGHT GAUGE         │
└─────────────────────────────────────────────┘
                      │
                      ▼
┌─────────────────────────────────────────────┐
│        DETERMINING THE COATING MATERIAL     │
│ CORRECTED BASIS WEIGHT BASED ON A DIFFERENCE │──508
│          BETWEEN THE COATED MATERIAL        │
│     UNCORRECTED BASIS WEIGHT AND THE BASE   │
│   MATERIAL UNCORRECTED BASIS WEIGHT, AND A  │
│       COATING MATERIAL CORRECTION FACTOR    │
└─────────────────────────────────────────────┘
```

FIG. 5

332 →

FIG. 6

Europäisches
Patentamt

European
Patent Office

Office européen
des brevets

# EUROPEAN SEARCH REPORT

**Application Number**

EP 25 17 6134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 359 105 B1 (HONEYWELL ASCA INC [CA]) 16 January 2013 (2013-01-16) | 1-5,7-15 | INV.<br>G01G9/00 |
| A | * paragraph [0002] *<br>* paragraph [0005] - paragraph [0008] *<br>* paragraph [0011] - paragraph [0014] *<br>* paragraph [0016] - paragraph [0021] *<br>* figure 1 *<br>----- | 6 | G01G23/01 |

**TECHNICAL FIELDS
SEARCHED      (IPC)**

G01G

The present search report has been drawn up for all claims

| Place of search | Date of completion of the search | Examiner |
|---|---|---|
| The Hague | 31 July 2025 | Koch, Florian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 6134

This annex lists the patent family members relating to the patent documents cited in  the above-mentioned European search report.
The members are as contained in the European Patent Office EDP file on
The European Patent Office is in no way liable for these particulars which are merely given for the purpose of information.

31-07-2025

| Patent document cited in search report | | Publication date | Patent family member(s) | | Publication date |
|---|---|---|---|---|---|
| EP 2359105 | B1 | 16-01-2013 | BR | PI0922338 A2 | 20-09-2016 |
| | | | CA | 2747215 A1 | 24-06-2010 |
| | | | EP | 2359105 A1 | 24-08-2011 |
| | | | JP | 5702298 B2 | 15-04-2015 |
| | | | JP | 2012512397 A | 31-05-2012 |
| | | | US | 2010159121 A1 | 24-06-2010 |
| | | | WO | 2010069051 A1 | 24-06-2010 |

EPO FORM P0459

For more details about this annex : see Official Journal of the European Patent Office, No. 12/82